# EUROPEAN PATENT SPECIFICATION

(11) **EP 2 851 179 B1**
(45) Date of publication and mention of the grant of the patent: **22.11.2017**
(21) Application number: 13185223.8
(22) Date of filing: 19.09.2013
(51) Int. Cl.: B29C 67/00

(54) **Device for printing simultaneously three dimensional objects**
Vorrichtung zum gleichzeitigen Drucken von dreidimensionalen Gegenständen
Dispositif pour imprimer simultanément des objets tridimensionnels

(43) Date of publication of application: 25.03.2015
(73) Proprietor: SDD Holding B.V., 8166 GD Emst (NL)
(72) Inventor: Oudsen, Johannes Franciscus Roland, 8162 PX Epe (NL)
(74) Representative: 't Jong, Bastiaan Jacob

(56) References cited:
- EP-A1- 2 537 642
- WO-A1-99/25169
- WO-A2-03/016067
- US-A1- 2004 175 451
- US-A1- 2006 061 618
- US-A1- 2012 161 350

## Description

The invention relates to a device for printing simultaneously three dimensional objects according to claim 1. Devices for printing three dimensional objects are already known for a few decades. The basic principal of all these devices is the same. Layers of a certain material are stacked on top of each other in order to obtain a three dimensional object.

A first method of three dimensional printing is arranging a layer of a curable fluid or granular material on a support surface and heating this layer with a laser beam, such that a two dimensional layer is created of cured fluid or melted granular material. The support surface is then lowered by the thickness of the layer and a new layer of curable fluid or granular material is provided and again irradiated by the laser. By repeating these steps a three dimensional object can be achieved built out of a plurality of layers.

A second method of three dimensional printing is by directing an extrusion nozzle over a support surface to build a layer of material out of extruded material, typically an extruded plastic. Again, after finishing a layer, the support layer is lowered by the thickness of the finished layer and a new layer is extruded on top of the finished layer. This method also results in a three dimensional object after repeating the steps numerous times.

The operational costs of three dimensional printing have dropped dramatically in the last years and the quality of the printed objects has increased, such that three dimensional printing has become a viable manufacturing alternative for low volume products, like special parts for all kind of devices. US2012/0161350 discloses a print head assembly suitable for printing 3D models while allowing multiple print heads to be interchanged. A disadvantage of the known printers is the lack of speed for producing a three dimensional object. Because an object is built out of layers of curable material or meltable material, it takes time for the material of a layer to solidify. Furthermore, to obtain an object with a high accuracy, one needs to print layers of a small thickness. But then a larger number of layers is needed to obtain a single object.

So, the speed of the three dimensional printing is inversely proportional to the desired accuracy and furthermore dependent on the speed with which material can be solidified. This will provide a problem when a small number of identical products are desired as the production time will increase proportional to the amount of desired products.

Another problem of known three dimensional printing devices is the relative small dimensions of the objects to be printed. Of course it is possible to scale a known device, but production time will also increase, because the printing time of a single layer will increase with the power of two. This is due to the single printing head having to cover a larger surface and having to deposit a larger volume of material. Combined with the increased number of layers necessary for a larger object, this will quickly result in unpractical production times.

Accordingly it is an object of the invention to provide a device for printing simultaneously three dimensional objects.

This object is achieved according to the invention with a device according to claim 1. The device according to the invention has a number of printing heads on the carriage, such that all printing heads will move synchronous. When all printing heads are also activated synchronous, identical objects will be formed. Because all printing heads will generate simultaneously a three dimensional object, the production time of the same number of objects as the number of printing heads, will be the same as the production time of a single object.

The device according to the invention can also be used for reducing the production time of large objects. Each printing head covers a part of the support surface and the printing heads combined can cover the full support surface. So, by cleverly moving the carriage and selectively activating the printing heads, one can generate layers for a large object quicker, than by moving a single printing head over the full support surface.

The movements of the carriage and the adjusting of the distance between the carriage and the support surface should be interpreted as movements relative to the support surface. It would for example also be possible to have a stationary carriage with the printing heads and a support surface, which is movable in the direction of all three axes of the Cartesian coordinate system.

The printing heads are preferably arranged in at least two rows, but for some applications, like long elongate objects it could be advantageous to use a single row printing heads. In such a case, the second pitch distance would be zero.

In the device according to the invention the stroke of the carriage in the direction of the first axis is less than two times, preferably substantially equal to, the first pitch distance and wherein the stroke of the carriage in the direction of the second axis is less than two times, preferably substantially equal to, the second pitch distance.

Only when a single row of printing heads is used, the stroke in the direction of the second axis would not be equal to zero, but would be equal to the full width of the support surface.

When the printing heads are equally distributed over the area of the support surface, the carriage only has to move over a small distance in both directions for the combined printing heads to cover the full support surface. In some cases it could be of advantage when the movement of the printing heads have a certain overlap, such that the objects made by two or more adjacent printing heads could be fused together.

In this way it is possible to make in one run the same number of objects as the number of printing heads, or a smaller number of objects, which have dimensions larger than could be made by a single printing head.

The stroke in both directions is dependent on the number of printing heads in the respective direction. If the number of printing heads in a direction is decreased, the stroke will be increased and vice versa.

In another embodiment of the device according to the invention, the device further comprises a frame arranged around the support surface, a carriage beam extending in the direction of the second axis arranged to the frame and movable in the direction of the first axis and a guide rail arranged on the carriage beam for guiding the carriage in the direction of the second axis.

This embodiment provides a simple, reliable and cost effective way of moving the carriage.

In yet another embodiment of the device according to the invention the frame is movable in the direction of the third axis of the Cartesian coordinate system in order to adjust the distance between the carriage and the support surface.

In a further preferred embodiment of the device according to the invention each printing head comprises a first extrusion nozzle for selectively extruding a first plastic.

The three dimensional printing technique using an extrusion nozzle is also called fused deposition modeling and is in particular suitable for small volume products.

Preferably each printing head comprises a second extrusion nozzle for selectively extruding a second plastic.

The second plastic can be used for providing a support structure for the first plastic. This enables the production of virtually any shape. The second plastic could for example be soluble in water or has a lower melting point than the first plastic, such that the support structure can easily be removed after printing the three dimensional object by either submerging the object in water or by heating the object to the melting temperature of the second plastic.

Depending on the printing method used, it could be desired to have a heated environment. For example, when extrusion is used, it is desired to ensure that the ambient temperature is high, e.g. 100°C, such that the extruded plastic is not cooled suddenly. To this end, the support surface may be heated. The support surface could be a sheet of glass which is provided at the bottom with heating elements. By arranging a housing around the device, the heat from the glass will be contained, to ensure a high ambient temperature. Also the housing provides a protection for the operator of the device against the moving parts and the high temperature.

These and other features of the invention will be elucidated in conjunction with the accompanying drawings.
Figure 1 shows a perspective view of an embodiment of a device according to the invention.
Figure 2 shows a schematic top view of the device according to figure 1.
Figure 3 shows a schematic top view of the support surface with a first configuration of printed objects.
Figure 4 shows a schematic top view of the support surface with a second configuration of printed objects.

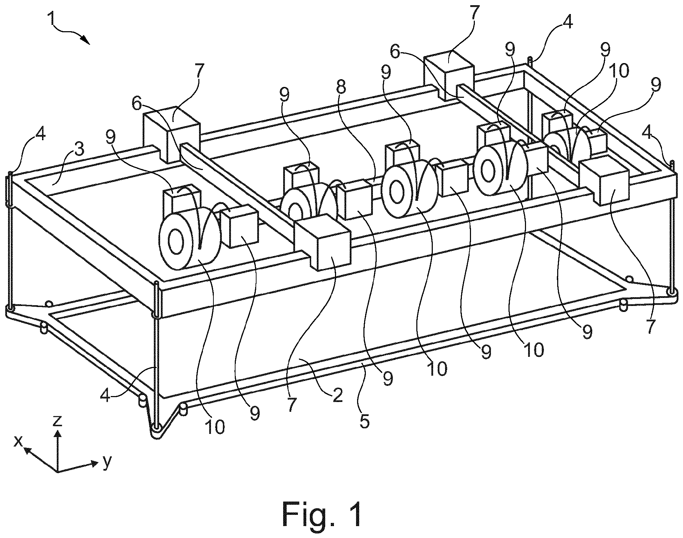

Figure 1 shows a perspective view of an embodiment of a device 1 according to the invention. The device 1 has a support surface 2 on which the objects are printed. A frame 3 is arranged around the support surface 2. This frame 3 is height adjustable in a Z-direction with the screw spindles 4, which are simultaneously driven by a drive belt 5.

Two carriage beams 6 are supported on the frame 3 by bearings 7, such that both carriage beams 6 can be displaced in the Y-direction.

The carriage beams 6 support the carriage 8, which is provided with a number of printing heads 9 and supply reals 10 for supplying a plastic to the printing heads 9. The carriage 8 is guided by the carriage beams 6, such that the carriage 8 is movable in the X-direction.

The movement of the frame 3, the carriage beams 6 and the carriage 8 are typically controlled by a controller or computer, which also controls the printing heads 9 in order to arrive at the desired shape of the three dimensional object.

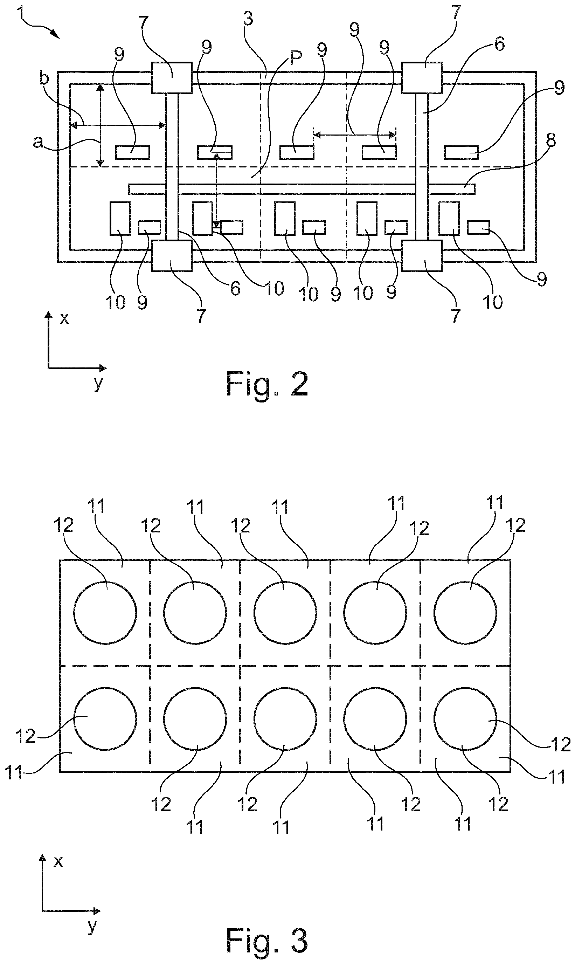

Figure 2 shows a schematic top view of the device 1 according to figure 1. The shown embodiment 1 has ten printing heads 9 attached to the carriage 8. Each printing head 9 covers a part of the support surface 2, which is indicated by the ten areas 11 bordered by the dotted lines. (see also figure 3)

The stroke a of the carriage 8 in the X-direction needs only to be equal to the pitch distance p between the two rows of printing heads 9 to cover the full width of the support surface 2. Similarly, the stroke b of the carriage in the Y-direction needs only to be equal to the pitch distance q of the printing heads 9 in a row.

It could be of advantage to have a somewhat larger stroke in both directions, such that some overlap is present of the working areas of the printing heads 9.

As shown in figure 3 it is possible with the device 1 according to the invention to simultaneously print ten three dimensional objects 12, wherein each printing head is responsible for printing a single object.

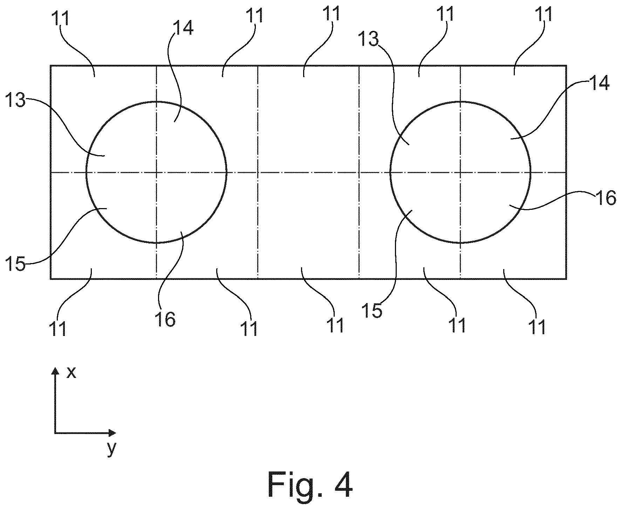

As shown in figure 4 it would also be possible with the device of figure 1 to print a second configuration of three dimensional objects 13, 14, 15, 16. The three dimensional objects 13, 14, 15 16 are in this configuration fused together such that two large objects are created, which could otherwise not be printed with a single printing head 9 or would take a substantial amount of time to print in comparison of printing simultaneously with four printing heads 9 per large object.

Although the invention is elucidated with printing heads being supplied with a plastic and accordingly use the fused deposition modeling method, it is obvious that the arrangement of multiple printing heads on a carriage can also be used for the three dimensional printing methods using a curable fluid or a granular material.

## Claims

1. Device (1) for printing simultaneously three dimensional objects, which device comprises:
- a support surface (2) for supporting the object to be printed;
- a carriage (8) arranged over the support surface, which carriage is movable along two axes of a Cartesian coordinate system parallel to the support surface and wherein the distance between the carriage and the support surface is adjustable; and a number of printing heads (9) arranged at the carriage, wherein the printing heads are positioned at a regular first pitch distance along the first axis of the Cartesian coordinate system and at a regular second pitch distance along the second axis of the Cartesian coordinate system,
**characterized in that** the stroke of the carriage in the direction of the first axis is less than two times, preferably substantially equal to, the first pitch distance and wherein the stroke of the carriage in the direction of the second axis is less than two times, preferably substantially equal to, the second pitch distance.

2. Device according to claim 1, further comprising a frame arranged around the support surface, a carriage beam extending in the direction of the second axis arranged to the frame and movable in the direction of the first axis and a guide rail arranged on the carriage beam for guiding the carriage in the direction of the second axis.

3. Device according to claim 2, wherein the frame is movable in the direction of the third axis of the Cartesian coordinate system in order to adjust the distance between the carriage and the support surface.

4. Device according to any of the preceding claims, wherein each printing head comprises a first extrusion nozzle for selectively extruding a first plastic.

5. Device according to claim 4, wherein each printing head comprises a second extrusion nozzle for selectively extruding a second plastic.

## Patentansprüche

1. Vorrichtung (1) zum gleichzeitigen Drucken dreidimensionaler Objekte, wobei die Vorrichtung umfasst:
- eine Tragoberfläche (2)
zum Tragen des zu druckenden Objekts;
- einen Wagen (8),
der über der Tragoberfläche eingerichtet ist, wobei der Wagen entlang von zwei Achsen eines kartesischen Koordinatensystems parallel zu der Tragoberfläche bewegbar ist, und wobei der Abstand zwischen dem Wagen und der Tragoberfläche einstellbar ist, und eine Anzahl von Druckköpfen (9), die an dem Wagen eingerichtet ist, wobei die Druckköpfe in einem regelmäßigen ersten Teilungsabstand entlang der ersten Achse des kartesischen Koordinatensystems und in einem regelmäßigen zweiten Teilungsabstand entlang der zweiten Achse des kartesischen Koordinatensystems positioniert sind,
**dadurch gekennzeichnet, dass** der Hub des Wagens in die Richtung der ersten Achse kleiner ist als zwei Mal, bevorzugt im Wesentlichen gleich dem ersten Teilungsabstand ist, und wobei der Hub des Wagens in die Richtung der zweiten Achse weniger ist als zwei Mal, bevorzugt im Wesentlichen gleich dem zweiten Teilungsabstand ist.

2. Vorrichtung nach Anspruch 1, die weiter einen Rahmen umfasst, der um die Tragoberfläche eingerichtet ist, einen Wagenträger, der sich in die Richtung der zweiten Achse erstreckt, eingerichtet zu dem Rahmen und bewegbar in die Richtung der ersten Achse, und eine Führungsschiene, die auf dem Wagenträger eingerichtet ist, um den Wagen in die Richtung der zweiten Achse zu führen.

3. Vorrichtung nach Anspruch 2, wobei der Rahmen in die Richtung der dritten Achse des kartesischen Koordinatensystems bewegbar ist, um den Abstand zwischen dem Wagen und der Tragoberfläche einzustellen.

4. Vorrichtung nach einem der vorstehenden Ansprüche, wobei jeder Druckkopf eine erste Extrusionsdüse zum selektiven Extrudieren eines ersten Kunststoffs umfasst.

5. Vorrichtung nach Anspruch 4, wobei jeder Druckkopf eine zweite Extrusionsdüse zum selektiven Extrudieren eines zweiten Kunststoffs umfasst.

## Revendications

1. Dispositif (1) pour l'impression simultanée d'objets tridimensionnels, lequel dispositif comprend :
- une surface de support (2) pour supporter l'objet à imprimer ;
- un chariot (8) agencé sur la surface de support, lequel chariot est mobile le long de deux axes d'un système de cordonnées cartésiennes parallèles à la surface de support et dans lequel la distance entre le chariot et la surface de support est réglable ; et un certain nombre de têtes d'impression (9) agencées sur le chariot, dans lequel les têtes d'impression sont positionnées à une première distance de calage normale le long du premier axe du système de coordonnées cartésiennes et à une seconde distance de calage normale le long du deuxième axe du système de coordonnées cartésiennes,
**caractérisé en ce que** la course du chariot dans la direction du premier axe est inférieure à deux fois, de préférence sensiblement égale à la première distance de calage et dans lequel la course du chariot dans la direction du deuxième axe est inférieure à deux fois, de préférence sensiblement égale à la seconde distance de calage.

2. Dispositif selon la revendication 1, comprenant en outre un châssis agencé autour de la surface de support, une poutre de chariot s'étendant dans la direction du deuxième axe agencée sur le châssis et mobile dans la direction du premier axe et un rail de guidage agencé sur la poutre de chariot afin de guider le chariot dans la direction du deuxième axe.

3. Dispositif selon la revendication 2, dans lequel le châssis est mobile dans la direction du troisième axe du système de coordonnées cartésiennes afin de régler la distance entre le chariot et la surface de support.

4. Dispositif selon l'une quelconque des revendications précédentes, dans lequel chaque tête d'impression comprend une première buse d'expression pour extruder sélectivement une première matière plastique.

5. Dispositif selon la revendication 4, dans lequel chaque tête d'impression comprend une seconde buse d'extrusion pour extruder sélectivement une seconde matière plastique.
